# EUROPEAN PATENT APPLICATION

(11) **EP 4 641 822 A1**
(43) Date of publication of application: **29.10.2025**
(21) Application number: 23933822.1
(22) Date of filing: 17.11.2023
(51) Int. Cl.: H01M 50/593, H01M 50/409, H01M 10/0587

(54) **BATTERY CELL, BATTERY, AND ELECTRICAL DEVICE**

(30) Priority: 18.04.2023 CN 202310416154
(71) Applicant: Contemporary Amperex Technology Co., Limited, Ningde, Fujian 352100 (CN)
(72) Inventor: DU, Xianglong, Ningde, Fujian 352100 (CN)
(74) Representative: Gong, Jinping
(86) International application number: PCT/CN2023/132234
(87) International publication number: WO 2024/216956

(57) **Abstract**

The present application discloses a battery cell, a battery, and an electrical device. The battery cell includes a shell, an electrode assembly, and an insulating member. The electrode assembly is accommodated in the shell and includes electrode plates and a separator, which are arranged in a stacked manner. The insulating member is attached to an outer side of the electrode assembly, and the surface roughness of at least some regions of an outer surface of the insulating member away from the electrode assembly is greater than the surface roughness of the separator.

## Description

### CROSS-REFERENCE TO RELATED APPLICATIONS

The present application claims priority to Chinese Patent Application No. 202310416154.8, filed on April 18, 2023 and entitled "BATTERY CELL, BATTERY, AND ELECTRICAL DEVICE", which is incorporated herein by reference in its entirety.

### TECHNICAL FIELD

The present application relates to the technical field of batteries, and more particularly, to a battery cell, a battery, and an electrical device.

### BACKGROUND

Battery cells are widely used in electronic devices such as mobile phones, laptops, electric bicycles, electric vehicles, electric aircrafts, electric ships, electric toy cars, electric toy ships, electric toy aircrafts, and electric tools.

During the development of battery technologies, how to improve the reliability of a battery cell is a research direction in battery technologies.

### SUMMARY

The present application provides a battery cell, a battery, and an electrical device, which can improve the reliability of a battery.

In a first aspect, an embodiment of the present application provides a battery cell, including a shell, an electrode assembly, and an insulating member. The electrode assembly is accommodated in the shell and includes electrode plates and a separator, which are arranged in a stacked manner. The insulating member is attached to an outer side of the electrode assembly, and the surface roughness of at least some regions of an outer surface of the insulating member that faces away from the electrode assembly is greater than the surface roughness of the separator.

The insulating member can cover the electrode assembly and reduce the exposed region of the electrode assembly, and the surface roughness of at least some regions of the outer surface of the insulating member is greater than the surface roughness of the separator, so that when the battery cell is subjected to external impact, the frictional resistance experienced by the insulating member is relatively great, thereby reducing the sliding of the electrode assembly in the shell, reducing the risk of failure of the battery cell and improving the reliability of the battery cell.

In some embodiments, the surface roughness of at least some regions of the outer surface of the insulating member is greater than or equal to 10 µm.

At least some regions of the outer surface of the insulating member have a larger surface roughness, so that when the battery cell is subjected to external impact, the frictional resistance experienced by the insulating member can be relatively great, thereby reducing the sliding of the electrode assembly in the shell, reducing the risk of failure of the battery cell and improving the reliability of the battery cell.

In some embodiments, the surface roughness of at least some regions of the outer surface of the insulating member is greater than or equal to 100 µm, so that the frictional resistance experienced by the insulating member is further increased, thereby reducing the sliding of the electrode assembly in the shell, reducing the risk of failure of the battery cell and improving the reliability of the battery cell.

In some embodiments, the surface roughness of the outer surface of the insulating member is Ra, and Ra satisfies: 10 µm ≤ Ra ≤ 3000 µm, so as to balance the frictional resistance experienced by the insulating member and the space occupied by the insulating member. On the premise that the frictional resistance experienced by the insulating member meets the requirements, the loss of energy density of the battery cell is reduced.

In some embodiments, 300 µm ≤ Ra ≤ 500 µm, so as to further balance the frictional resistance experienced by the insulating member and the space occupied by the insulating member. On the premise that the frictional resistance experienced by the insulating member meets the requirements, the loss of energy density of the battery cell is reduced.

In some embodiments, the outer surface of the insulating member includes a first region and a second region connected to the first region, the surface roughness of the first region is greater than the surface roughness of the second region, and the surface roughness of the first region is greater than the surface roughness of the separator.

The above technical solution can increase the frictional resistance experienced by the insulating member while reducing the area of the insulating member that requires a roughening treatment, thereby lowering costs.

In some embodiments, a plurality of first regions are provided.

When the battery cell is subjected to external impact, the plurality of first regions can form a plurality of position-limiting sites, so as to improve the uniformity of force distribution on the insulating member, thus reducing the risk of damage to the insulating member while reducing the sliding of the electrode assembly in the shell.

In some embodiments, a plurality of second regions are provided, and the plurality of first regions and the plurality of second regions are alternately arranged.

The first regions and the second regions are alternately arranged such that, when the battery cell is subjected to external impact, the difference in the frictional resistances experienced by different regions of the insulating member is reduced, thereby reducing wrinkling deformation of the insulating member and deformation of the electrode assembly, thus improving the reliability of the battery cell.

In some embodiments, the frictional coefficient of at least some regions of the outer surface of the insulating member is greater than or equal to 0.2, so that when the battery cell is subjected to external impact, the frictional resistance experienced by the insulating member is relatively great, thereby reducing the sliding of the electrode assembly in the shell, reducing the risk of failure of the battery cell and improving the reliability of the battery cell.

In some embodiments, the frictional coefficient of the outer surface of the insulating member is greater than or equal to 0.4, so that the frictional resistance experienced by the insulating member is further increased, thereby reducing the sliding of the electrode assembly in the shell, reducing the risk of failure of the battery cell and improving the reliability of the battery cell.

In some embodiments, the outer surface of the insulating member is provided with a plurality of recesses. By creating recesses on the outer surface of the insulating member, the surface roughness of the outer surface of the insulating member is increased, so that when the battery cell is subjected to external impact, the frictional resistance experienced by the insulating member is increased, thereby reducing the sliding of the electrode assembly in the shell, reducing the risk of failure of the battery cell and improving the reliability of the battery cell.

In some embodiments, a plurality of protrusions are provided on a side of the insulating member that faces the electrode assembly, and the positions of the plurality of protrusions are arranged in a one-to-one correspondence with the positions of the plurality of recesses. The recesses and protrusions can be formed by stamping the insulating member, so that the forming process can be simplified, thus reducing the cost of the insulating member.

In some embodiments, in an unwound state, an inner surface of the insulating member that faces the electrode assembly is a flat plane. An inner surface of the insulating member is configured to attach to the electrode assembly. By configuring the inner surface of the insulating member to be a flat plane, the connection interface between the insulating member and the electrode assembly can be improved, and the connection strength between the insulating member and the electrode assembly is improved, thus reducing the risk of detachment of the insulating member.

In some embodiments, the insulating member includes a substrate and an adhesive layer. The adhesive layer is arranged on a side of the substrate that faces the electrode assembly and adheres the substrate and the electrode assembly. The plurality of recesses are arranged on the substrate, so that the influence of the recesses on the thickness of the adhesive layer can be reduced, so as to improve the adhesion strength between the insulating member and the electrode assembly, thus reducing the risk of detachment of the insulating member.

In some embodiments, the outer surface of the insulating member is provided with a plurality of protrusions. By creating protrusions on the outer surface of the insulating member, the surface roughness of the outer surface of the insulating member is increased, so that when the battery cell is subjected to external impact, the frictional resistance experienced by the insulating member is increased, thereby reducing the sliding of the electrode assembly in the shell, reducing the risk of failure of the battery cell and improving the reliability of the battery cell.

In some embodiments, the insulating member includes a substrate and a plurality of particles, and the plurality of particles are attached to a side of the substrate that faces away from the electrode assembly. By attaching the particles to the substrate, the surface roughness of the outer surface of the insulating member is increased, so that when the battery cell is subjected to external impact, the frictional resistance experienced by the insulating member is increased, thereby reducing the sliding of the electrode assembly in the shell, reducing the risk of failure of the battery cell and improving the reliability of the battery cell.

In some embodiments, the particles are made of an elastic material. The elastic particles can play a buffering role, so as to reduce the impact force experienced by the electrode assembly when the battery cell is subjected to external impact, thereby reducing the risk of damage to the electrode assembly and improving the reliability of the battery cell.

In some embodiments, the volume distribution particle size Dv50 of the particles is 0.2-3 mm, so as to balance the frictional resistance experienced by the insulating member and the space occupied by the insulating member. On the premise that the frictional resistance experienced by the insulating member meets the requirements, the loss of energy density of the battery cell is reduced.

In some embodiments, the volume distribution particle size Dv50 of the particles is 0.5-1.5 mm, so as to further balance the frictional resistance experienced by the insulating member and the space occupied by the insulating member.

In some embodiments, the electrode plates and the separator are arranged in a wound manner. The insulating member is configured to restrain a winding end of the separator. The insulating member can restrain the separator to reduce the risk of unraveling of the separator and the deformation of the electrode assembly.

In a second aspect, an embodiment of the present application provides a battery, including a plurality of the battery cell provided by any one of the embodiments in the first aspect of the present application.

In a third aspect, an embodiment of the present application provides an electrical device, including the battery cell provided by any one of the embodiments in the first aspect of the present application. The battery cell is configured to provide electrical energy.

### BRIEF DESCRIPTION OF THE DRAWINGS

In order to provide a clearer explanation of the technical solution of the embodiments of the present application, a brief introduction will be given to the accompanying drawings required in the embodiments of the present application. It is evident that the accompanying drawings described below are only some embodiments of the present application. For those of ordinary skill in the art, other accompanying drawings can also be obtained based on the drawings without any creative effort.
FIG. 1 is a schematic structural view of a vehicle provided by some embodiments of the present application;
FIG. 2 is an exploded schematic view of a battery provided by some embodiments of the present application;
FIG. 3 is a schematic structural view of a battery module as shown in FIG. 2;
FIG. 4 is a schematic structural view of a battery cell provided by some embodiments of the present application;
FIG. 5 is an exploded schematic view of the battery cell as shown in FIG. 4;
FIG. 6 is a schematic view of an electrode assembly and an insulating member of a battery cell provided by some embodiments of the present application;
FIG. 7 is a schematic sectional view of the electrode assembly and the insulating member as shown in FIG. 6;
FIG. 8 is a schematic view of an electrode assembly and an insulating member of a battery cell provided by some other embodiments of the present application;
FIG. 9 is a schematic view of an insulating member of a battery cell provided by some embodiments of the present application in an unwound state;
FIG. 10 is a schematic sectional view of FIG. 9 taken along the line A-A;
FIG. 11 is another schematic sectional view of FIG. 9 taken along the line A-A;
FIG. 12 is yet another schematic sectional view of FIG. 9 taken along the line A-A;
FIG. 13 is a schematic view of an insulating member of a battery cell provided by some other embodiments of the present application in an unwound state; and
FIG. 14 is a schematic sectional view of FIG. 13 taken along the line B-B.

In the drawings, the drawings are not drawn to actual scale.

### DETAILED DESCRIPTION

To make the objectives, technical solutions, and advantages of the embodiments of the present invention clearer, the technical solutions of the embodiments of the present application will be clearly described below with reference to the accompanying drawings in the embodiments of the present invention. Apparently, the described embodiments are merely some, rather than all, of the embodiments of the present invention. All other embodiments obtained by those of ordinary skill in the art based on the embodiments of the present application without involving any creative effort shall fall within the scope of protection of the present application.

Unless otherwise defined, all technical and scientific terms used in the present application have the same meanings as commonly understood by those skilled in the field to which the present application belongs. In the present application, the terms used in the specification of the present application are only for the purpose of describing specific embodiments and is not intended to limit the present application. The terms "include" and "have", as well as any variations thereof, in the specification and claims of the present application and the above Description of Drawings are intended to cover non-exclusive inclusion. The terms "first", "second", etc. in the specification and claims of the present application or the above drawings are used to distinguish different objects, not to describe a specific order or primary-secondary relationship.

Reference to "an embodiment" in the present application means that a particular feature, structure or characteristic described with reference to the embodiment may be included in at least one embodiment of the present application. The appearance of the phrase throughout the specification does not necessarily refer to the same embodiment, nor is it an independent or alternative embodiment that is mutually exclusive of other embodiments.

In the description of the present application, it needs to be noted that unless otherwise specified and defined, the terms "install", "link", "connect", and "attach" should be understood in a broad sense. For example, the terms may refer to either a fixed connection, or a detachable connection or an integral connection. The terms may refer to a direct connection, an indirect connection via an intermediary, or internal communication between two elements. For those of ordinary skill in the art, the specific meanings of the above terms in the present application can be understood according to the specific circumstances.

In the present application, the term "and/or" only refers to an association relationship that describes the associated objects, which means that there may be three relationships. For example, A and/or B can indicate three situations: A exists alone, A and B both exist, and B exists alone. In addition, the symbol "/" in the present application generally indicates an "or" relationship between the associated objects before and after it.

In an embodiment of the present application, like reference numerals denote like components, and for the sake of brevity, detailed descriptions of the same components are omitted in different embodiments. It should be understood that the dimensions, such as thickness, length and width, of various components and the dimensions, such as overall thickness, length and width, of integrated devices in the embodiments of the present application, as shown in the accompanying drawings are only illustrative and should not constitute any limitations on the present application.

In the present application, "plurality" refers to two or more (including two).

In the present application, the battery cell may include lithium-ion secondary battery cells, lithium-ion primary battery cells, lithium-sulfur battery cells, sodium-and-lithium-ion battery cells, sodium-ion battery cells, or magnesium-ion battery cells, etc. This is not limited in the embodiments of the present application. The battery cell can be cylindrical, flat, cuboid, or in other shapes. This is not limited in the embodiments of the present application.

A battery mentioned in an embodiment of the present application can include one or more battery cells so as to provide a single physical module with a higher voltage and capacity. When there are a plurality of battery cells, the plurality of battery cells are connected in series, or in parallel, or in series-parallel by a busbar component.

In some embodiments, the battery can be a battery module. When there are a plurality of battery cells, the plurality of battery cells are arranged and fixed to form a battery module.

In some embodiments, the battery can be a battery pack. The battery pack includes a box and a battery cell, and the battery cell or battery module is accommodated in the box.

In some embodiments, the box can serve as part of a chassis structure of a vehicle. For example, the part of box can become at least part of a floor of the vehicle, or the part of box can become at least part of a cross beam and a longitudinal beam of the vehicle.

In some embodiments, the battery can be an energy storage device. Energy storage devices include energy storage containers, energy storage electric cabinets, etc.

The battery cell generally includes an electrode assembly. The electrode assembly includes a positive electrode, a negative electrode, and a separator. During the charging and discharging process of the battery cell, active ions (for example, lithium ions) are intercalated and deintercalated back and forth between the positive electrode and the negative electrode. The separator is arranged between the positive electrode and the negative electrode and can mainly serve to prevent a short circuit between the positive and negative electrodes while allowing active ions to pass through.

In some embodiments, the positive electrode can be a positive electrode plate. The positive electrode plate can include a positive electrode current collector and a positive electrode active material arranged on at least one surface of the positive electrode current collector.

By way of example, the positive electrode current collector has two surfaces opposite to each other in a thickness direction of the positive electrode current collector, and the positive electrode active material layer is arranged on either or both of the two opposite surfaces of the positive electrode current collector.

By way of example, the positive electrode current collector can be a metal foil or a composite current collector. For example, as the metal foil, aluminum or stainless steel treated with silver on the surface, stainless steel, copper, aluminum, nickel, a carbon-based electrode, carbon, nickel, titanium, etc. can be used. The composite current collector can include a polymer material substrate layer and a metal layer. The composite current collector can be formed by forming a metal material (aluminum, an aluminum alloy, nickel, a nickel alloy, titanium, a titanium alloy, silver, a silver alloy, or the like) on a polymer material substrate (for example, a substrate of polypropylene, polyethylene terephthalate, polybutylene terephthalate, polystyrene, polyethylene, etc.).

By way of example, the positive electrode active material can include at least one of the following materials: a lithium-containing phosphate, a lithium transition metal oxide, and respective modified compounds thereof. However, the present application is not limited to these materials. Other traditional materials that can be used as positive electrode active materials for batteries may also be used. Only a single one of or a combination of two or more of these positive electrode active materials can be used.

In some embodiments, the positive electrode can be made of a foam metal. The foam metal can be foam nickel, foam copper, foam aluminum, foam alloys, foam carbon, etc. When the foam metal is used as the positive electrode, the surface of the foam metal may not be provided with the positive electrode active material. Of course, a positive electrode active material may also be provided. By way of example, the foam metal may also be filled in and/or deposited with a lithium source material, potassium metal, or sodium metal, and the lithium source material is lithium metal and/or a lithium-rich material.

In some embodiments, the negative electrode can be a negative electrode plate, and the negative electrode plate can include a negative electrode current collector.

By way of example, the negative electrode current collector can be a metal foil or a composite current collector. For example, as the metal foil, aluminum or stainless steel treated with silver on the surface, stainless steel, copper, aluminum, nickel, a carbon-based electrode, carbon, nickel, titanium, etc. can be used. The composite current collector can include a polymer material substrate layer and a metal layer. The composite current collector can be formed by forming a metal material (copper, a copper alloy, nickel, a nickel alloy, titanium, a titanium alloy, silver, a silver alloy, or the like) on a polymer material substrate (for example, a substrate of polypropylene, polyethylene terephthalate, polybutylene terephthalate, polystyrene, polyethylene, etc.).

By way of example, the negative electrode plate can include a negative electrode current collector and a negative electrode active material arranged on at least one surface of the negative electrode current collector.

By way of example, the negative electrode current collector has two surfaces opposite to each other in a thickness direction of the negative electrode current collector, and the negative electrode active material layer is arranged on either or both of the two opposite surfaces of the negative electrode current collector.

By way of example, the negative electrode active material can be a negative electrode active material well known in the art for battery cells. By way of example, the negative electrode active material can include at least one of the following materials: artificial graphite, natural graphite, soft carbon, hard carbon, a silicon-based material, a tin-based material, lithium titanate, etc.

In some embodiments, the negative electrode can be made of a foam metal. The foam metal can be foam nickel, foam copper, foam aluminum, foam alloys, foam carbon, etc. When the foam metal is used as the negative electrode plate, the surface of the foam metal may not be provided with the negative electrode active material. Of course, a negative electrode active material may also be provided.

By way of example, the negative electrode current collector may also be filled in and/or deposited with a lithium source material, potassium metal, or sodium metal, and the lithium source material is lithium metal and/or a lithium-rich material.

In some embodiments, the material of the positive electrode current collector can be aluminum, and the material of the negative electrode current collector can be copper.

In some embodiments, the electrode assembly further includes a separator. The separator is arranged between the positive electrode and the negative electrode. The type of the separator is not particularly limited in the present application, and any well-known separator with a porous structure having good chemical stability and mechanical stability may be selected.

By way of example, the main material of the separator can be selected from at least one of glass fibers, non-woven fabric, polyethylene, polypropylene, polyvinylidene fluoride, and ceramic.

In some embodiments, the battery cell further includes an electrolyte. The electrolyte plays a role of conducting ions between the positive electrode and the negative electrode. The type of the electrolyte is not specifically limited in the present application and can be selected according to requirements. The electrolyte can be liquid, gelled, or all solid.

In some embodiments, the electrode assembly has a wound structure. The positive electrode plate and the negative electrode plate are wound into a wound structure.

In some embodiments, the electrode assembly has a laminated structure.

A plurality of positive electrode plates and a plurality of negative electrode plates can be respectively arranged, and the plurality of positive electrode plates and the plurality of negative electrode plates are arranged in an alternately stacked manner.

By way of example, a plurality of positive electrode plates can be arranged, and the negative electrode plates are folded into a plurality of stacked folded segments, and one positive electrode plate is sandwiched between adjacent folded segments.

By way of example, both the positive electrode plates and the negative electrode plates are folded to form a plurality of folded segments arranged in a stacked manner.

By way of example, a plurality of separators can be arranged, which are respectively arranged between any adjacent positive electrode plates or negative electrode plates.

By way of example, the separators can be continuously arranged between any adjacent positive electrode plates or negative electrode plates by folding or winding.

In some embodiments, the shape of the electrode assembly can be cylindrical, flat, polygonal prism-shaped, etc.

In some embodiments, the electrode assembly is provided with tabs, and the tabs can conduct current from the electrode assembly. The tabs include a positive electrode tab and a negative electrode tab.

The battery cell further includes a shell, and an accommodating cavity for accommodating the electrode assembly is formed inside the shell. The shell can protect the electrode assembly from the outside to prevent external foreign materials from affecting the charging or discharging of the electrode assembly.

In the related art, the periphery of an electrode assembly is usually provided with a separator, and the separator is relatively smooth. When the battery cell is subjected to external impact, the frictional resistance between the separator and other components (such as the shell) is relatively small, and the electrode assembly is prone to vibration and sliding in the shell, which leads to the risk of failure of the battery cell (for example, the tabs are prone to tearing when the electrode assembly slides), thereby affecting the reliability of the battery cell.

In view of this, an embodiment of the present application provides a technical solution, in which an insulating member is arranged on the outer side of the electrode assembly, and the surface roughness of at least some regions of the outer surface of the insulating member is greater than the surface roughness of the separator, so that when the battery cell is subjected to external impact, the sliding of the electrode assembly in the shell is reduced, thereby reducing the risk of failure of the battery cell and improving the reliability of the battery cell.

The technical solution described in the embodiment of the present application is suitable for batteries and electrical devices in which batteries are used.

The electrical device can be a vehicle, a mobile phone, a portable device, a laptop, a ship, a spacecraft, an electric toy, an electric tool, etc. The vehicle can be a fuel-powered vehicle, a gas-powered vehicle, or a new energy vehicle. The new energy vehicle can be an all-electric vehicle, a hybrid electric vehicle, an extended range vehicle, etc. Spacecraft includes aircrafts, rockets, space shuttles, spaceships, etc. Electric toys include fixed or mobile electric toys, such as game machines, electric car toys, electric ship toys, and electric aircraft toys. Electric tools include metal cutting electric tools, grinding electric tools, assembling electric tools, railway electric tools, such as electric drills, electric grinders, electric wrenches, electric screwdrivers, electric hammers, electric impact drills, concrete vibrators, and electric planers. The embodiment of the present application does not impose special limitations on the above electrical devices.

For the convenience of explanation, the following embodiments are described using a vehicle as an example of the electrical device.

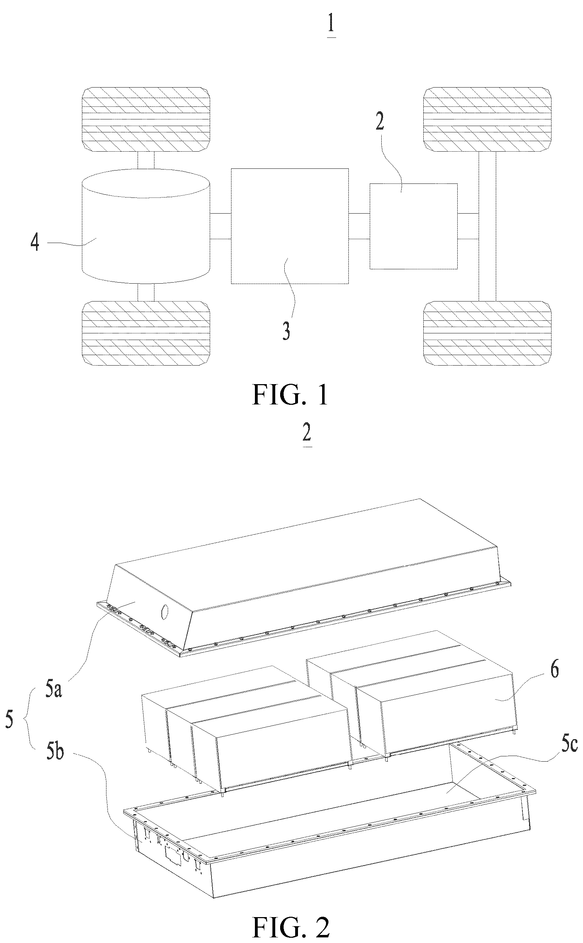

FIG. 1 is a schematic structural view of a vehicle provided by some embodiments of the present application.

As shown in FIG. 1, a battery 2 is arranged inside a vehicle 1. The battery 2 can be arranged at the bottom, head, or tail of the vehicle 1. The battery 2 can be configured to supply power to the vehicle 1. For example, the battery 2 can be used as an operating power source for the vehicle 1.

The vehicle 1 can further include a controller 3 and a motor 4. The controller 3 is configured to control the battery 2 to supply power to the motor 4, for example, to meet working power requirements during the starting, navigation, and traveling of the vehicle 1.

In some embodiments of the present application, the battery 2 can not only serve as an operating power source for the vehicle 1, but can also as a driving power source for the vehicle 1, in place of or partially in place of fuel or natural gas, to provide a driving power for the vehicle 1.

FIG. 2 is an exploded schematic view of a battery provided by some embodiments of the present application.

As shown in FIG. 2, the battery 2 includes a box 5 and a battery cell (not shown), and the battery cell is accommodated in the box 5.

The box 5 is configured to accommodate the battery cell. The box 5 can also have various structures. In some embodiments, the box 5 can include a first box part 5a and a second box part 5b. The first box part 5a and the second box part 5b cover each other, and the first box part 5a and the second box part 5b jointly define an accommodating space 5c for accommodating the battery cell. The second box part 5b can be a hollow structure with one end open, and the first box part 5a has a plate-like structure. The first box part 5a covers the opening side of the second box part 5b to form a box 5 with an accommodating space 5c. Both the first box part 5a and the second box part 5b can also be hollow structures with one side open. The opening side of the first box part 5a covers the opening side of the second box part 5b to form a box 5 with an accommodating space 5c. Of course, the first box part 5a and the second box part 5b may have various shapes, such as cylindrical and cuboid.

In order to improve the sealing performance after the first box part 5a is connected to the second box part 5b, a sealing member, such as a sealant or a sealing ring, may also be provided between the first box part 5a and the second box part 5b.

Assuming that the first box part 5a covers the top of the second box part 5b, the first box part 5a can also be referred to as an upper box cover, and the second box part 5b can also be referred to as a lower box.

In the battery 2, there may be either one battery cell or a plurality of battery cells. If there are a plurality of battery cells, the plurality of battery cells can be connected in series, or in parallel, or in series-parallel. Being connected in series-parallel means that there are both series and parallel connections between the plurality of battery cells. The plurality of battery cells can be directly connected together in series, or in parallel, or in series-parallel, and the unity formed by the plurality of battery cells is then accommodated in the box 5. Of course, the case may also be that a plurality of battery cells are connected in series, or in parallel, or in series-parallel to form a battery module 6, and a plurality of battery modules 6 are further connected in series, or in parallel, or in series-parallel to form a unity, which is accommodated in the box 5.

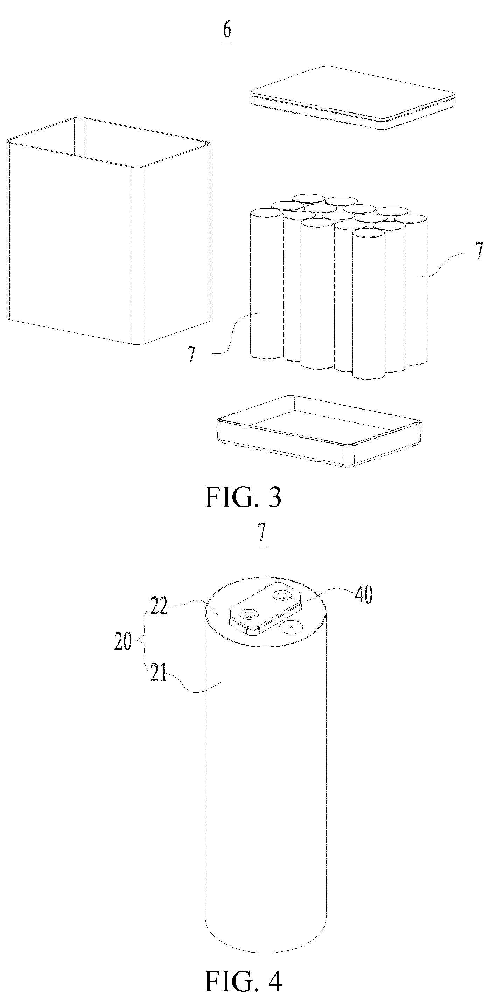

FIG. 3 is a schematic structural view of a battery module as shown in FIG. 2.

As shown in FIG. 3, in some embodiments, a plurality of battery cells 7 are provided, and the plurality of battery cells 7 are connected in series, or in parallel, or in series-parallel in advance to form a battery module 6. A plurality of battery modules 6 are further connected in series, or in parallel, or in series-parallel to form a unity, which is accommodated in the box.

A plurality of battery cells 7 in the battery module 6 can be electrically connected via a busbar component, so that the plurality of battery cells 7 in the battery module 6 can be connected in series, or in parallel, or in series-parallel.

The battery cells 7 can be cylindrical battery cells, rectangular battery cells, or battery cells in other shapes.

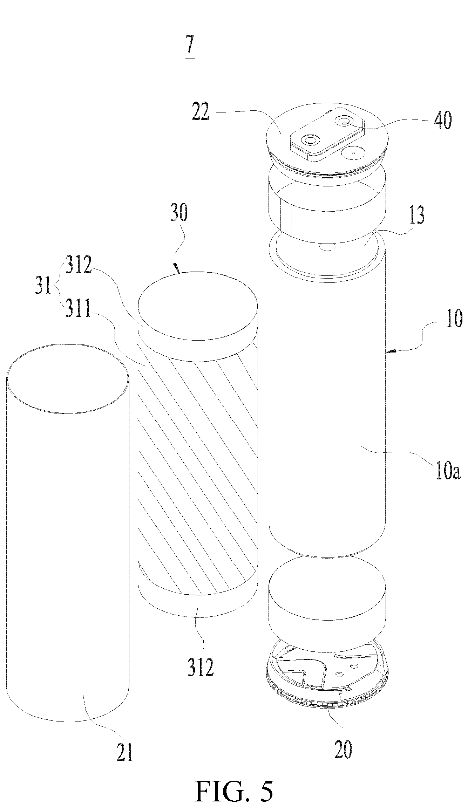

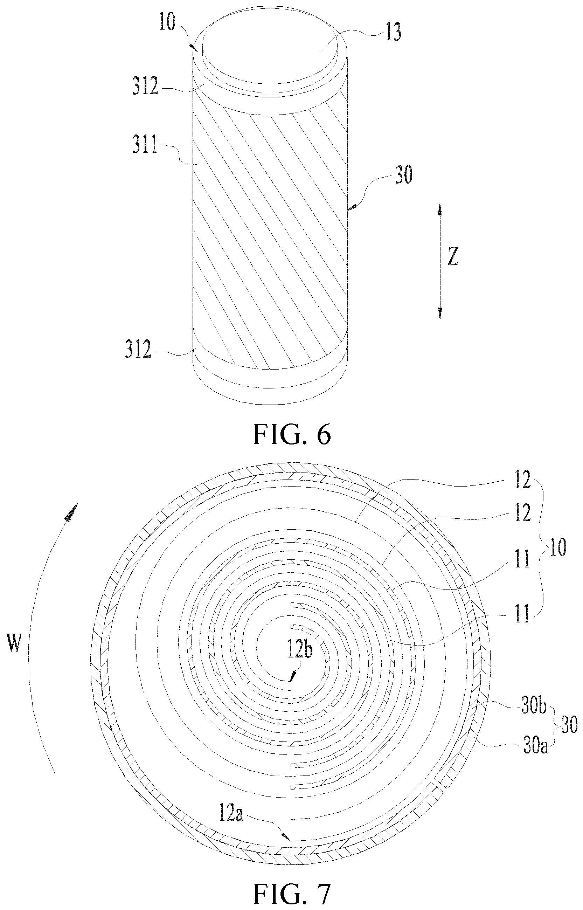

FIG. 4 is a schematic structural view of a battery cell provided by some embodiments of the present application; FIG. 5 is an exploded schematic view of the battery cell as shown in FIG. 4; FIG. 6 is a schematic view of an electrode assembly and an insulating member of a battery cell provided by some embodiments of the present application; and FIG. 7 is a schematic sectional view of the electrode assembly and the insulating member as shown in FIG. 6.

Referring to FIG. 4 to FIG. 7, the battery cell 7 of the embodiment of the present application includes an electrode assembly 10, a shell 20, and an insulating member 30. The electrode assembly 10 is accommodated in the shell 20 and includes electrode plates 11 and a separator 12, which are arranged in a stacked manner. The insulating member 30 is attached to an outer side of the electrode assembly 10, and the surface roughness of at least some regions of an outer surface 31 of the insulating member 30 that faces away from the electrode assembly 10 is greater than the surface roughness of the separator 12.

The shell 20 has a hollow structure, the interior of which forms an accommodating space for accommodating the electrode assembly 10 and an electrolyte. The shape of the shell 20 can be determined based on the specific shape of the electrode assembly 10. For example, if the electrode assembly 10 has a cuboid structure, a cuboid shell can be selected; and if the electrode assembly 10 has a cylindrical structure, a cylindrical shell can be selected.

The shell 20 can be made of various materials. For example, the shell 20 can be made of a metal or plastic. Alternatively, the material of the shell 20 can be copper, iron, aluminum, steel, an aluminum alloy, etc.

There can be either one or more electrode assemblies 10. When there are a plurality of electrode assemblies 10, the plurality of electrode assemblies 10 can be arranged in a stacked manner. Alternatively, an insulating member 30 is attached to an outer peripheral surface 10a of each electrode assembly 10.

The electrode assembly 10 can include a plurality of electrode plates 11. The plurality of electrode plates 11 can include a positive electrode plate and a negative electrode plate. A separator 12 is arranged between the positive electrode plate and the negative electrode plate and serves to prevent a short circuit between the positive and negative electrodes while allowing active ions to pass through.

The electrode assembly 10 can be a wound structure, a laminated structure, or other structures.

The shape of the electrode assembly 10 can be cylindrical, flat, polygonal prism-shaped, etc.

The type of the separator 12 is not particularly limited in the present application, and any well-known separator with a porous structure having good chemical stability and mechanical stability may be selected. By way of example, the main material of the separator 12 can be selected from at least one of glass fibers, non-woven fabric, polyethylene, polypropylene, polyvinylidene fluoride, and ceramic.

In an embodiment of the present application, "attached" can be attached and connected. Illustratively, the insulating member 30 can be attached to the outer side of the electrode assembly 10 by adhesion, coating, or other means.

The insulating member 30 can be connected to the separator 12. Illustratively, the insulating member 30 is attached to the separator 12.

When viewed from the outer side of the electrode assembly 10, the electrode plates 11 may or may not be exposed to the outside of the separator 12. In some instances, part of the electrode plates 11 is exposed to the outside of the separator 12, and the insulating member 30 can be attached to the electrode plates 11 and cover the part of the electrode plates 11 that is exposed to the separator 12.

In some instances, the surface roughness of the entire region of the outer surface 31 of the insulating member 30 is greater than the surface roughness of the separator 12. In some other instances, the surface roughness of some regions of the outer surface 31 of the insulating member 30 is greater than the surface roughness of the separator 12.

Illustratively, when measuring the roughness of a certain region of the outer surface 31 of the insulating member 30, a unit area can be cut from this region for measurement. Alternatively, a circle with a diameter of 10 mm can be cut for measurement.

In an embodiment of the present application, the insulating member 30 can cover the electrode assembly 10 and reduce the exposed region of the electrode assembly 10, and the surface roughness of at least some regions of the outer surface 31 of the insulating member 30 is greater than the surface roughness of the separator 12, so that when the battery cell 7 is subjected to external impact, the frictional resistance experienced by the insulating member 30 is relatively great, thereby reducing the sliding of the electrode assembly 10 in the shell 20, reducing the risk of failure of the battery cell 7 and improving the reliability of the battery cell 7.

In addition, during the formation of the battery cell 7, metal particles may remain in the shell 20. The insulating member 30 can protect the electrode assembly 10, reduce the possibility of the metal particles puncturing the separator 12, reduce the risk of the metal particles conducting the electrode assembly 10 with the shell 20, and improve the reliability of the battery cell 7.

In some embodiments, during the production of the battery cell 7, a fixture is generally required to clamp the electrode assembly 10, so as to realize the transfer or treatment of the electrode assembly 10 (for example, a flattening treatment on the tab 13 of the electrode assembly 10).

Covering the outer side of the electrode assembly 10 with the insulating member 30 can also reduce the direct contact between the fixture and the electrode assembly 10, thereby reducing the risk of breakage of the separator 12 and the electrode plates 11.

In addition, the fixture can clamp a region with a relatively large surface roughness on the outer surface 31 of the insulating member 30, so that the relative sliding between the insulating member 30 and the fixture during the processing of the electrode assembly 10 can be reduced, thus reducing the risk of dislocation of the electrode plates 11 and the separator 12 due to sliding and improving the reliability of the electrode assembly 10.

Illustratively, during the flattening of the tab 13, a flattening device exerts a thrust on the electrode assembly 10. The outer surface 31 of the insulating member 30 has a relatively large surface roughness, which can reduce the relative sliding between the insulating member 30 and the fixture under the action of the thrust, the dislocation of the separator 12, and the risk of scalding when the separator 12 undergoes the subsequent welding process.

In some embodiments, the surface roughness of the separator 12 is 1-9 µm. Illustratively, the surface roughness of the separator 12 is 1 µm, 2 µm, 3 µm, 4 µm, 5 µm, 6 µm, 7 µm, 8 µm, or 9 µm.

Alternatively, the surface roughness of the separator 12 is 3-6 µm.

In some embodiments, the shell 20 includes a shell body 21 and an end cover 22. The shell body 21 has an opening, and the end cover 22 is configured to cover the opening.

The shell body 21 is a component for cooperating with the end cover 22 to form an internal cavity of the battery cell 7, and the formed internal cavity can be configured to accommodate the electrode assembly 10, the electrolyte, and other components.

The shell body 21 and the end cover 22 can be independent components. Illustratively, an opening can be provided on the shell body 21, and the end cover 22 covers the opening at the opening to form the internal cavity of the battery cell 7.

The shell body 21 may have various shapes and sizes, such as a cuboid shape, a cylindrical shape, and a hexagonal prism shape. Specifically, the shape of the shell body 21 can be determined based on the specific shape and size of the electrode assembly 10. The shell body 21 can be made of various materials, such as copper, iron, aluminum, stainless steel, or an aluminum alloy. This is not particularly limited in the embodiments of the present application.

The shape of the end cover 22 can be adapted to the shape of the shell body 21 to fit the shell body 21. Alternatively, the end cover 22 can be made of a material with a certain hardness and strength (for example, an aluminum alloy), so that the end cover 22 is less likely to deform under squeezing and collision, enabling the battery cell 7 to have a higher structural strength and also improved reliability performance.

The end cover 22 is connected to the shell body 21 by welding, adhesion, snap fitting, or other means.

In some instances, the shell body 21 can be a structure with one side open, and one end cover 22 is provided and covers the shell body 21. In some other instances, the shell body 21 can also be a structure with two sides open, and two end covers 22 are provided. The two end covers 22 respectively cover the two openings of the shell body 21.

In some embodiments, the battery cell 7 further includes an electrode terminal 40 arranged on the shell 20, and the electrode terminal 40 is electrically connected to the electrode assembly 10.

In some embodiments, at least part of the electrode terminal 40 is exposed to the outside of the shell 20, so as to realize electrical connection to other structures (such as a busbar component). The electrode terminal 40 can be configured to electrically connect the electrode assembly 10 to a circuit outside the battery cell 7 to realize charging and discharging.

There can be either one or more electrode terminals 40. In some instances, there is one electrode terminal 40. One of the electrode terminal 40 and the shell 20 is electrically connected to the positive electrode plate, and the other is electrically connected to the negative electrode plate. The electrode terminal 40 and the shell 20 serve as two output electrodes of the battery cell 7. In some other instances, there are two electrode terminals 40. One electrode terminal 40 is electrically connected to the positive electrode plate, and the other electrode terminal 40 is electrically connected to the negative electrode plate.

In some embodiments, the electrode terminal 40 is arranged on the end cover 22.

In some embodiments, there are two end covers 22 and two electrode terminals 40. The two electrode terminals 40 are respectively arranged on the two end covers 22.

In some embodiments, the electrode assembly 10 includes a coating layer (not shown) arranged on the surface of the separator 12. The coating layer is a functional layer arranged on the surface of separator 12. Illustratively, the coating layer includes an inorganic material, a polymer binder, and a dispersant. The inorganic material can include at least one of boehmite and silicon dioxide, the polymer binder can include at least one of PVDF and polystyrene-acrylate, and the dispersant can include polyvinyl alcohol. This inorganic material can restrict the separator 12 and reduce the contraction of the separator 12. The polymer binder can be bonded to the electrode plates 11 to increase the overall rigidity of the electrode assembly 10.

In some embodiments, the electrode plates 11 and the separator 12 are arranged in a wound manner. In other words, the electrode assembly 10 has a wound structure.

In some embodiments, the electrode assembly 10 has a columnar structure. Alternatively, the electrode assembly 10 has a cylindrical structure.

In some embodiments, the insulating member 30 can be configured to restrain a winding end 12a of the separator 12.

When the separator 12 is in an unwound state, two ends of the separator 12 along its own length direction are a winding head 12b and a winding end 12a. In a wound state, the winding head 12b is close to the inside of the electrode assembly 10, and the winding end 12a is close to the outside of the electrode assembly 10. During the winding formation process of the electrode assembly 10, the winding of the separator 12 starts from the winding head 12b and stops winding at the winding end 12a.

The insulating member 30 can restrain the separator 12 to reduce the risk of unraveling of the separator 12 and the deformation of the electrode assembly 10.

In some embodiments, along the winding direction X of the electrode assembly 10, the dimension that the insulating member 30 extends is greater than or equal to 1/4 of the circumference of the outer peripheral surface 10a of the electrode assembly 10. Alternatively, the dimension that the insulating member 30 extends is greater than or equal to 1/2 of the circumference of the outer peripheral surface 10a of the electrode assembly 10.

In some embodiments, the insulating member 30 encircles the electrode assembly 10 once. Of course, due to the process error, the two ends of the insulating member 30 along the winding direction X may not necessarily meet exactly, and a relatively small gap may be left between the two ends of the insulating member 30. Lap joint may also exist between the two ends of the insulating member 30.

In an embodiment of the present application, when the battery cell 7 is subjected to external impact, the frictional resistance experienced by the insulating member 30 can be increased, thereby reducing the sliding of the electrode assembly 10 in the shell 20, reducing the risk of failure of the battery cell 7 and improving the reliability of the battery cell 7.

The insulating member 30 encircles the electrode assembly 10 once and can effectively cover the outer peripheral surface 10a of the electrode assembly 10, thereby reducing the risk of the metal particles puncturing the electrode assembly 10. In addition, the embodiment of the present application can also facilitate clamping the insulating member 30 at an included angle.

In some embodiments, the electrode assembly 10 is cylindrical. The outer peripheral surface 10a of the electrode assembly 10 is approximately a cylindrical surface.

Illustratively, the insulating member 30 is generally bent into an arc shape. Correspondingly, the outer surface 31 of the insulating member 30 is roughly an arc surface.

In some embodiments, the surface roughness of at least some regions of the outer surface 31 of the insulating member 30 is greater than or equal to 10 µm.

At least some regions of the outer surface 31 of the insulating member 30 have a larger surface roughness, so that when the battery cell 7 is subjected to external impact, the frictional resistance experienced by the insulating member 30 can be relatively great, thereby reducing the sliding of the electrode assembly 10 in the shell 20, reducing the risk of failure of the battery cell 7 and improving the reliability of the battery cell 7.

In some embodiments, the surface roughness of at least some regions of the outer surface 31 of the insulating member 30 is greater than or equal to 100 µm, so that when the battery cell 7 is subjected to external impact, the frictional resistance experienced by the insulating member 30 is further increased, thereby reducing the sliding of the electrode assembly 10 in the shell 20, reducing the risk of failure of the battery cell 7 and improving the reliability of the battery cell 7.

In some embodiments, the surface roughness of the entire region of the outer surface 31 of the insulating member 30 is greater than or equal to 10 µm. In other words, the surface roughness of any sample of unit area arbitrarily cut from the insulating member 30 is greater than or equal to 10 µm.

In an embodiment of the present application, when the battery cell 7 is subjected to external impact, the frictional resistance experienced by the insulating member 30 is further increased.

In addition, during the production of the battery cell 7, the fixture can clamp any region of the insulating member 30, which can improve the production efficiency.

In some embodiments, the surface roughness of the outer surface 31 of the insulating member 30 is Ra, and Ra satisfies: 10 µm ≤ Ra ≤ 3000 µm.

The greater the surface roughness of the outer surface 31 of the insulating member 30, the larger the space occupied by the insulating member 30. If the surface roughness of the outer surface 31 of the insulating member 30 is too large, the utilization rate of the internal space of the battery cell 7 and the energy density of the battery cell 7 will be relatively low.

In an embodiment of the present application, Ra is set to 10-3000 µm, so as to balance the frictional resistance experienced by the insulating member 30 and the space occupied by the insulating member 30. On the premise that the frictional resistance experienced by the insulating member 30 meets the requirements, the loss of energy density of the battery cell 7 is reduced.

Alternatively, Ra is 10 µm, 20 µm, 50 µm, 100 µm, 200 µm, 300 µm, 400 µm, 500 µm, 800 µm, 1000 µm, 1500 µm, 2000 µm, 2500 µm, or 3000 µm.

In some embodiments, 300 µm ≤ Ra ≤ 500 µm, so as to further balance the frictional resistance experienced by the insulating member 30 and the space occupied by the insulating member 30. On the premise that the frictional resistance experienced by the insulating member 30 meets the requirements, the loss of energy density of the battery cell 7 is reduced.

In some embodiments, the frictional coefficient of at least some regions of the outer surface 31 of the insulating member 30 is greater than or equal to 0.2.

The frictional coefficient of the outer surface 31 of the insulating member 30 is associated with both the surface roughness of the outer surface 31 of the insulating member 30 and the material of the insulating member 30. In an embodiment of the present application, the frictional coefficient can be changed either by changing the surface roughness of the outer surface 31 of the insulating member 30 or by changing the material of the insulating member 30.

The frictional coefficient of the outer surface 31 of the insulating member 30 is positively related to the frictional resistance experienced by the insulating member 30. In an embodiment of the present application, the frictional coefficient of at least some regions of the outer surface 31 of the insulating member 30 is greater than or equal to 0.2, so that when the battery cell 7 is subjected to external impact, the frictional resistance experienced by the insulating member 30 is relatively great, thereby reducing the sliding of the electrode assembly 10 in the shell 20, reducing the risk of failure of the battery cell 7 and improving the reliability of the battery cell 7.

In some embodiments, the frictional coefficient of the outer surface 31 of the insulating member 30 is greater than or equal to 0.4. In an embodiment of the present application, the frictional resistance experienced by the insulating member 30 can be further increased, thereby reducing the sliding of the electrode assembly 10 in the shell 20, reducing the risk of failure of the battery cell 7 and improving the reliability of the battery cell 7.

In some embodiments, the frictional coefficient of the outer surface 31 of the insulating member 30 is 0.2, 0.3, 0.4, 0.5, 0.6, 0.7, or 0.8.

In some embodiments, the outer surface 31 of the insulating member 30 includes a first region 311 and a second region 312 connected to the first region 311, the surface roughness of the first region 311 is greater than the surface roughness of the second region 312, and the surface roughness of the first region 311 is greater than the surface roughness of the separator 12.

In an embodiment of the present application, the number of the first regions 311 and the number of the second regions 312 are not limited. In other words, there can be either one or more first regions 311; and there can be either one or more second regions 312.

In an embodiment of the present application, the shape of the first region 311 is also not limited. Illustratively, the first region 311 is a strip-shaped or a rectangular.

The surface roughness of the second region 312 can be greater than, equal to, or less than the surface roughness of the separator 12. This is not limited in the embodiments of the present application.

In an embodiment of the present application, the frictional resistance experienced by the insulating member 30 can be increased while reducing the area of the insulating member 30 that requires a roughening treatment, thereby lowering costs.

In an embodiment of the present application, the outer surface 31 of the insulating member 30 is subjected to a differentiated treatment to form a relatively distinct boundary between the first region 311 and the second region 312, which makes it convenient for an external detection device to sense the position of the insulating member 30, thereby facilitating positioning.

In some embodiments, the surface roughness of the second region 312 can be greater than the surface roughness of the separator 12 to increase the frictional resistance experienced by the insulating member 30.

In some embodiments, a plurality of first regions 311 are provided.

When the battery cell 7 is subjected to external impact, the plurality of first regions 311 can form a plurality of position-limiting sites, so as to improve the uniformity of force distribution on the insulating member 30, thus reducing the risk of damage to the insulating member 30 while reducing the sliding of the electrode assembly 10 in the shell 20.

In some embodiments, there are two second regions 312. The two second regions 312 are respectively connected to two ends of the first region 311.

In some embodiments, the electrode assembly 10 has a wound structure. The second regions 312 are respectively connected to the two ends of the first region 311 along the winding axis direction Z of the electrode assembly 10.

During the process of inserting the electrode assembly 10 into the shell, the second regions 312 are introduced into the shell body 21 before the first region 311. The second regions 312 have a smaller surface roughness than the first region 311. When the second regions 312 rub against the shell body 21 due to assembly errors, the frictional resistance experienced by the second regions 312 is relatively small, so that the difficulty of introduction into the shell can be reduced, thereby improving the assembly efficiency.

In some embodiments, the surface roughness of the first region 311 is 10-3000 µm.

In some embodiments, the frictional coefficient of the first region 311 is greater than or equal to 0.2.

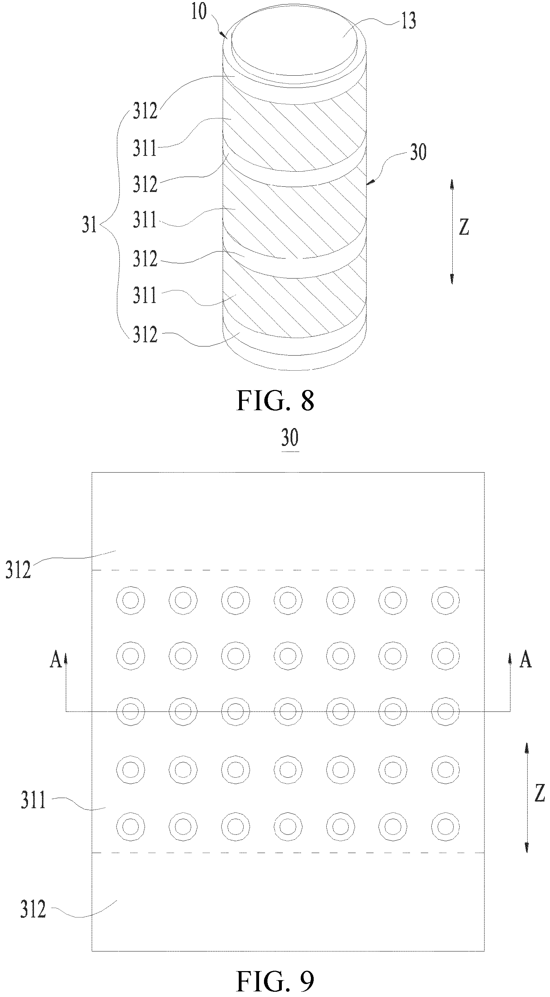

FIG. 8 is a schematic view of an electrode assembly and an insulating member of a battery cell provided by some other embodiments of the present application.

As shown in FIG. 8, in some embodiments, a plurality of second regions 312 are provided, and the plurality of first regions 311 and the plurality of second regions 312 are alternately arranged.

In an embodiment of the present application, the first regions 311 and the second regions 312 are alternately arranged such that, when the battery cell 7 is subjected to external impact, the difference in the frictional resistances experienced by different regions of the insulating member 30 is reduced, thereby reducing wrinkling deformation of the insulating member 30 and deformation of the electrode assembly 10, thus improving the reliability of the battery cell 7.

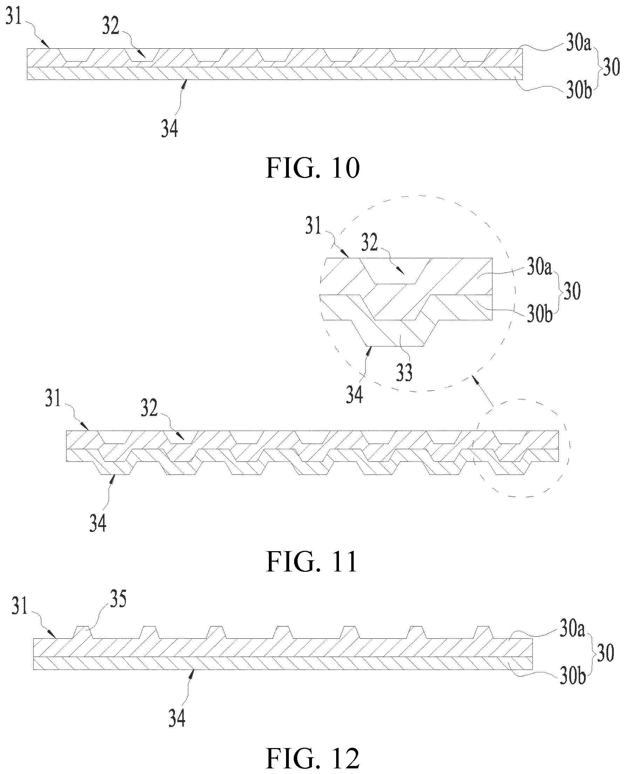

FIG. 9 is a schematic view of an insulating member of a battery cell provided by some embodiments of the present application in an unwound state; and FIG. 10 is a schematic sectional view of FIG. 9 taken along the line A-A.

As shown in FIG. 9 and FIG. 10, in some embodiments, the outer surface 31 of the insulating member 30 is provided with a plurality of recesses 32.

Illustratively, the outer surface 31 of the insulating member 30 includes bottom surfaces of the recesses 32 and side surfaces of the recesses 32.

In an embodiment of the present application, the formation method for the recesses 32 is not limited. In some instances, the recesses 32 can be formed on the outer surface 31 of the insulating member 30 by stamping the insulating member 30. In some other instances, the recesses 32 can be formed by removing part of the material of the insulating member 30.

In an embodiment of the present application, the shape of the recesses 32 is not limited. For example, the shape of the openings of the recesses 32 can be circular, rectangular, trapezoidal, triangular, elliptical, or in other shapes.

In an embodiment of the present application, the surface roughness of the outer surface 31 of the insulating member 30 is increased by creating recesses 32 on the outer surface 31 of the insulating member 30, so that when the battery cell 7 is subjected to external impact, the frictional resistance experienced by the insulating member 30 is increased, thereby reducing the sliding of the electrode assembly 10 in the shell 20, reducing the risk of failure of the battery cell 7 and improving the reliability of the battery cell 7.

In some embodiments, in the unwound state of the insulating member 30, a plurality of recesses 32 are distributed in a rectangular array.

In some embodiments, in an unwound state, an inner surface 34 of the insulating member 30 that faces the electrode assembly 10 is a flat plane.

The inner surface 34 of the insulating member 30 is configured to attach to the electrode assembly 10. By configuring the inner surface 34 of the insulating member 30 to be a flat plane, the connection interface between the insulating member 30 and the electrode assembly 10 can be improved, and the connection strength between the insulating member 30 and the electrode assembly 10 is improved, thus reducing the risk of detachment of the insulating member 30.

In some embodiments, the insulating member 30 includes a substrate 30a and an adhesive layer 30b. The adhesive layer 30b is arranged on a side of the substrate 30a that faces the electrode assembly 10 and adheres the substrate 30a and the electrode assembly 10.

In some embodiments, the resistance to friction and the puncture resistance of the substrate 30a are both superior to those of the separator 12.

The substrate 30a has a relatively good resistance to friction and puncture resistance, so as to reduce the risk of frictional wear of the substrate 30a and the risk of metal particles puncturing the substrate 30a, thereby improving the insulation performance and reliability of the insulating member 30.

In some embodiments, the insulating member 30 is an adhesive tape. Alternatively, the insulating member 30 is a blue adhesive tape.

In some embodiments, the plurality of recesses 32 are arranged on the substrate 30a. In an embodiment of the present application, the influence of the recesses 32 on the thickness of the adhesive layer 30b can be reduced, so as to improve the adhesion strength between the insulating member 30 and the electrode assembly 10, thus reducing the risk of detachment of the insulating member 30.

In some embodiments, a plurality of recesses 32 are formed on the substrate 30a by removing part of the material of the substrate 30a.

FIG. 11 is another schematic sectional view of FIG. 9 taken along the line A-A.

As shown in FIG. 9 and FIG. 11, in some embodiments, a plurality of protrusions 33 are provided on a side of the insulating member 30 that faces the electrode assembly 10, and the positions of the plurality of protrusions 33 are arranged in a one-to-one correspondence with the positions of the plurality of recesses 32.

In an embodiment of the present application, the recesses 32 and protrusions 33 can be formed by stamping the insulating member 30, so that the formation process can be simplified, thus reducing the cost of the insulating member 30.

Illustratively, the recesses 32 can be formed by an embossing process.

In some embodiments, the depth of the recesses 32 is smaller than the thickness of the substrate 30a, so as to reduce the risk of the substrate 30a being teared due to excessive deformation.

FIG. 12 is yet another schematic sectional view of FIG. 9 taken along the line A-A.

Referring to FIG. 9 and FIG. 12, in some embodiments, the outer surface 31 of the insulating member 30 is provided with a plurality of protrusions 35.

In an embodiment of the present application, the surface roughness of the outer surface 31 of the insulating member 30 is increased by creating protrusions 35 on the outer surface 31 of the insulating member 30, so that when the battery cell 7 is subjected to external impact, the frictional resistance experienced by the insulating member 30 is increased, thereby reducing the sliding of the electrode assembly 10 in the shell 20, reducing the risk of failure of the battery cell 7 and improving the reliability of the battery cell 7.

Illustratively, the outer surface 31 includes top surfaces and side surfaces of the protrusions 35.

In some embodiments, in the unwound state of the insulating member 30, a plurality of protrusions 35 are distributed in a rectangular array.

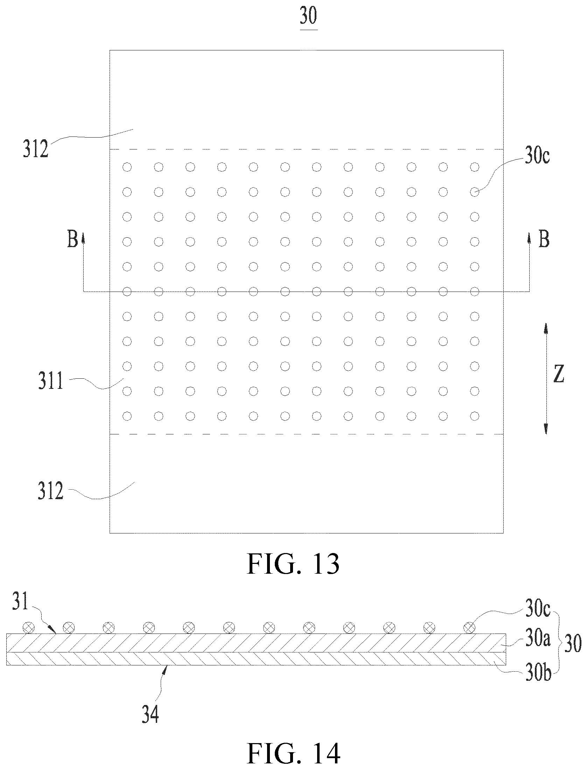

FIG. 13 is a schematic view of an insulating member of a battery cell provided by some other embodiments of the present application in an unwound state; and FIG. 14 is a schematic sectional view of FIG. 13 taken along the line B-B.

As shown FIG. 13 and FIG. 14, the insulating member 30 includes a substrate 30a and a plurality of particles 30c, and the plurality of particles 30c are attached to a side of the substrate 30a that faces away from the electrode assembly 10.

In an embodiment of the present application, the shape, material, size, etc. of the particles 30c are not particularly limited.

In an embodiment of the present application, the way in which the particles 30c are attached to the substrate 30a is also not limited. For example, the particles 30c can be attached to the surface of the substrate 30a by adhesion, spraying, or other means.

In the present application, by attaching the particles 30c to the substrate 30a, the surface roughness of the outer surface 31 of the insulating member 30 is increased, so that when the battery cell 7 is subjected to external impact, the frictional resistance experienced by the insulating member 30 is increased, thereby reducing the sliding of the electrode assembly 10 in the shell 20, reducing the risk of failure of the battery cell 7 and improving the reliability of the battery cell 7.

In some embodiments, the particles 30c are attached to the surface of the substrate 30a by a spraying process. The spraying process is simple, which helps to reduce the cost of the insulating member 30.

Illustratively, the particles 30c, a binder, a solvent, and other materials can be mixed into a slurry, and the slurry is then applied to the substrate 30a by a spraying process.

In some embodiments, the insulating member 30 includes an adhesive layer 30b. The adhesive layer 30b is arranged on a side of the substrate 30a that faces the electrode assembly 10 and adheres the substrate 30a and the electrode assembly 10, and a plurality of particles 30c are attached to a side of the substrate 30a that faces away from the adhesive layer 30b.

In some embodiments, the particles 30c are made of an elastic material.

The elastic particles 30c can play a buffering role, so as to reduce the impact force experienced by the electrode assembly 10 when the battery cell 7 is subjected to external impact, thereby reducing the risk of damage to the electrode assembly 10 and improving the reliability of the battery cell 7.

In some embodiments, the material of the particles 30c can be an insulating rubber or an insulating plastic.

In some embodiments, the particles 30c are polyurethane particles.

In some embodiments, the volume distribution particle size Dv50 of the particles 30c is 0.2-3 mm.

The volume distribution particle size Dv50 of the material has a meaning well known in the art and indicates the corresponding particle size at which the cumulative volume distribution percentage of the material reaches 50%, which can be determined by instruments and methods known in the art. For example, determination can be made by a laser particle size analyzer with reference to GB/T 19077-2016. The test instrument can be Model Mastersizer 3000 laser particle size analyzer of Malvern Instruments Inc., UK.

The smaller the volume distribution particle size Dv50 of the particles 30c, the smaller the surface roughness of the outer surface 31 of the insulating member 30. In an embodiment of the present application, the volume distribution particle size Dv50 of the particles 30c is greater than or equal to 0.2 mm, such that the insulating member 30 experiences a relatively great frictional resistance, thereby reducing the sliding of the electrode assembly 10 in the shell 20, reducing the risk of failure of the battery cell 7 and improving the reliability of the battery cell 7.

The greater the volume distribution particle size Dv50 of the particles 30c, the larger the space occupied by the particles 30c. In an embodiment of the present application, the volume distribution particle size Dv50 of the particles 30c is less than or equal to 3 mm, which can reduce the waste of space and the loss of energy density.

In an embodiment of the present application, the volume distribution particle size Dv50 of the particles 30c is set to 0.2-3 mm, so as to balance the frictional resistance experienced by the insulating member 30 and the space occupied by the insulating member 30. On the premise that the frictional resistance experienced by the insulating member 30 meets the requirements, the loss of energy density of the battery cell 7 is reduced.

Alternatively, the volume distribution particle size Dv50 of the particles 30c is 0.2 mm, 0.3 mm, 0.5 mm, 0.8 mm, 1.0 mm, 1.2 mm, 1.5 mm, 1.8 mm, 2 mm, 2.5 mm, or 3 mm.

In some embodiments, the volume distribution particle size Dv50 of the particles 30c is 0.5-1.5 mm. In an embodiment of the present application, the frictional resistance experienced by the insulating member 30 and the space occupied by the insulating member 30 can be further balanced.

According to some embodiments of the present application, the present application further provides a battery including a plurality of the battery cell 7 in any one of the above embodiments.

According to some embodiments of the present application, the present application further provides an electrical device including the battery cell 7 in any one of the above embodiments. The battery cell 7 is configured to provide electrical energy. The electrical device can be any of the foregoing devices or systems in which the battery cell 7 is used.

Referring to FIG. 4 to FIG. 7, an embodiment of the present application provides a battery cell 7, including a shell 20, an electrode assembly 10, and an insulating member 30. The electrode assembly 10 is accommodated in the shell 20 and includes electrode plates 11 and a separator 12. The electrode plates 11 and the separator 12 are wound to form a cylindrical wound structure.

The insulating member 30 encircles the electrode assembly 10 once and is attached to the outer peripheral surface 10a of the electrode assembly 10, and the insulating member 30 covers the winding end 12a of the separator 12. The surface roughness of at least some regions of the outer surface 31 of the insulating member 30 that faces away from the electrode assembly 10 is greater than the surface roughness of the separator 12.

In some instances, the surface roughness of the outer surface 31 of the insulating member 30 can be increased by creating recesses 32 or protrusions 35 on the outer surface 31 of the insulating member 30, such that the surface roughness of the outer surface 31 of the insulating member 30 is greater than or equal to 10 µm.

In some other instances, the surface roughness of the outer surface 31 of the insulating member 30 can be increased by spraying particles onto the insulating member 30, such that the surface roughness of the outer surface 31 of the insulating member 30 is greater than or equal to 10 µm.

It needs to be noted that without conflict, the embodiments of the present application and the features in the embodiments can be combined with each other.

Finally, it should be noted that the foregoing embodiments are merely used for describing, rather than limiting, the technical solutions of the present application. Although the present application has been described in detail with reference to the foregoing embodiments, it should be appreciated by those skilled in the art that it is still possible to make modifications to the technical solutions disclosed in each of the foregoing embodiments or to make equivalent substitutions on some of the technical features thereof; however, these modifications or substitutions do not make the essence of the corresponding technical solutions deviate from the spirit and scope of the technical solution of each of the embodiments in the present application.

## Claims

1. A battery cell, comprising:
a shell;
an electrode assembly accommodated in the shell and comprising electrode plates and a separator, which are arranged in a stacked manner; and
an insulating member attached to an outer side of the electrode assembly, wherein the surface roughness of at least some regions of an outer surface of the insulating member that faces away from the electrode assembly is greater than the surface roughness of the separator.

2. The battery cell according to claim 1, wherein the surface roughness of at least some regions of the outer surface of the insulating member is greater than or equal to 10 µm.

3. The battery cell according to claim 2, wherein the surface roughness of at least some regions of the outer surface of the insulating member is greater than or equal to 100 µm.

4. The battery cell according to claim 2, wherein the surface roughness of the outer surface of the insulating member is Ra, and Ra satisfies: 10 µm ≤ Ra ≤ 3000 µm.

5. The battery cell according to claim 4, wherein 300 µm ≤ Ra ≤ 500 µm.

6. The battery cell according to any one of claims 1 to 5, wherein the outer surface of the insulating member comprises a first region and a second region connected to the first region, the surface roughness of the first region is greater than the surface roughness of the second region, and the surface roughness of the first region is greater than the surface roughness of the separator.

7. The battery cell according to claim 6, wherein a plurality of first regions are provided.

8. The battery cell according to claim 7, wherein a plurality of second regions are provided, and the plurality of first regions and the plurality of second regions are alternately arranged.

9. The battery cell according to any one of claims 1 to 8, wherein the frictional coefficient of at least some regions of the outer surface of the insulating member is greater than or equal to 0.2.

10. The battery cell according to claim 9, wherein the frictional coefficient of the outer surface of the insulating member is greater than or equal to 0.4.

11. The battery cell according to any one of claims 1 to 10, wherein the outer surface of the insulating member is provided with a plurality of recesses.

12. The battery cell according to claim 11, wherein a plurality of protrusions are provided on a side of the insulating member that faces the electrode assembly, and the positions of the plurality of protrusions are arranged in a one-to-one correspondence with the positions of the plurality of recesses.

13. The battery cell according to claim 11, wherein in an unwound state, an inner surface of the insulating member that faces the electrode assembly is a flat plane.

14. The battery cell according to any one of claims 11 to 13, wherein the insulating member comprises a substrate and an adhesive layer, and the adhesive layer is arranged on a side of the substrate that faces the electrode assembly and adheres the substrate and the electrode assembly; and
the plurality of recesses are arranged on the substrate.

15. The battery cell according to any one of claims 1 to 10, wherein the outer surface of the insulating member is provided with a plurality of protrusions.

16. The battery cell according to any one of claims 1 to 10, wherein the insulating member comprises:
a substrate; and
a plurality of particles attached to a side of the substrate that faces away from the electrode assembly.

17. The battery cell according to claim 16, wherein the particles are made of an elastic material.

18. The battery cell according to claim 16 or 17, wherein the volume distribution particle size Dv50 of the particles is 0.2-3 mm.

19. The battery cell according to claim 18, wherein the volume distribution particle size Dv50 of the particles is 0.5-1.5 mm.

20. The battery cell according to any one of claims 1 to 19, wherein the electrode plates and the separator are arranged in a wound manner; and
the insulating member is configured to restrain a winding end of the separator.

21. A battery, comprising a plurality of the battery cell according to any one of claims 1 to 20.

22. An electrical device, comprising the battery cell according to any one of claims 1 to 20, wherein the battery cell is configured to provide electrical energy.
